# EUROPEAN PATENT SPECIFICATION

(11) **EP 0 665 544 B1**
(45) Date of publication and mention of the grant of the patent: **24.06.1998**
(21) Application number: 95104582.2
(22) Date of filing: 16.03.1993
(51) Int. Cl.: G11B 17/04, G11B 33/08, G11B 7/08

(54) **Disc loading apparatus**
Plattenladegerät
Appareil de chargement de disque

(30) Priority: 19.03.1992 JP 93825/92
(43) Date of publication of application: 02.08.1995
(62) Divisional of application: 93104274.1
(73) Proprietor: SONY CORPORATION, Tokyo (JP)
(72) Inventor: Tanaka, Akira, Shinagawa-ku, Tokyo (JP)
(74) Representative: Körber, Wolfhart, Dr. rer.nat.

(56) References cited:
- EP-A- 0 216 442
- EP-A- 0 416 797
- DE-A- 3 835 210
- FR-A- 2 653 259
- GB-A- 2 227 594
- US-A- 4 561 085

## Description

### BACKGROUND OF THE INVENTION

### 1. Field of the Invention

This invention relates to a disk drive suitable for use with, for example, a compact disk player.

### 2. Description of the Related Art

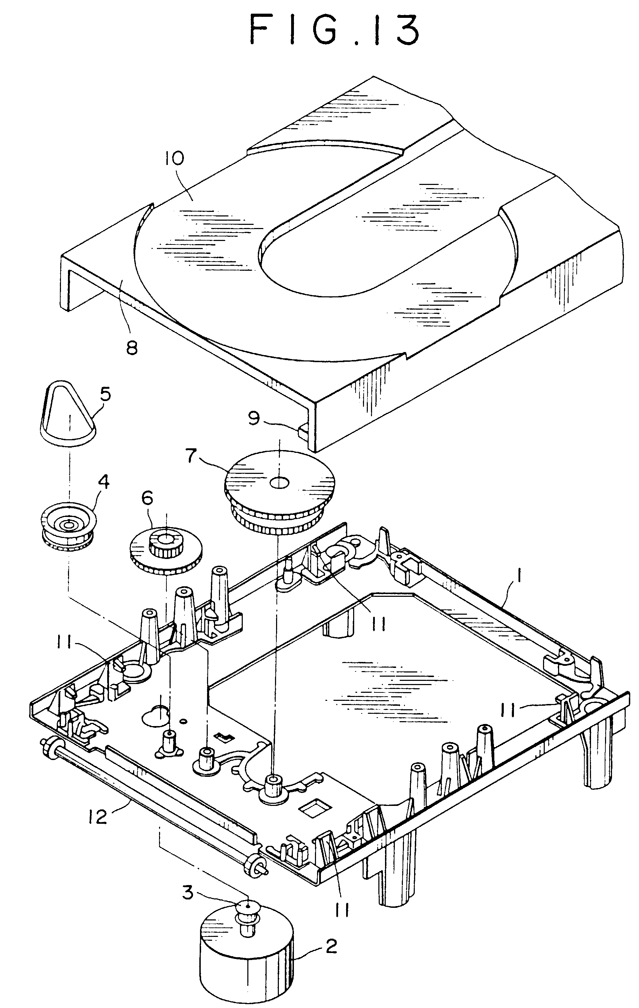

Various disk drives are conventionally known and incorporated in various apparatus such as a compact disk player. An exemplary one of a conventional disk loading apparatus is shown in Fig. 13. Referring to Fig. 13, the disk loading mechanism shown includes a loading motor 2 mounted on a main chassis 1. A motor pulley 3 is securely mounted on a rotary shaft of the loading motor 2. A belt 5 extends around the motor pulley 3 so that rotation of the motor pulley 3 is transmitted to a loading pulley 4 mounted for rotation on the main chassis 1. An intermediate gear 6 and a drive gear 7 are mounted on the main chassis 1, and rotation of the loading pulley 4 is transmitted to the drive gear 7 via the intermediate gear 6.

A tray 8 having a disk receiving portion 10 for receiving a disk thereon is supported for movement on the main chassis 1 under the guidance of a plurality of guide elements 11. A rack 9 is formed on one of a pair of inner side faces of the tray 8 for engaging the drive gear 7.

When the loading motor 2 is energized to rotate, the rotation thereof is transmitted to the rack 9 via the motor pulley 3, the loading pulley 4, the belt 5, the intermediate gear 6 and the drive gear 7. As a result, the tray 8 is moved relative to the main chassis 1. Consequently, a disk placed on the receiving portion 10 of the tray 8 is loaded to or unloaded from a predetermined position.

In the conventional compact disk player, the axes of rotation of the rotational elements of the drive system from the loading motor 2 to the drive gear 7 thus extend in a direction perpendicular to the direction of advancing and retracting movement of the tray 8. Accordingly, the conventional compact disk player has a subject that a comparatively great dimension is required in a direction perpendicular to the direction of advancing and retracting movement of the tray, that is, in the vertical direction of the compact disk player and it is difficult to reduce the dimension and hence the overall thickness of the compact disk player.

EP-A-0 416 797 discloses a disk drive having a turntable on a pivotable base.

### SUMMARY OF THE INVENTION

It is an object of the present invention to provide a disk drive which allows reduction of the overall thickness of an apparatus in which the disk loading apparatus is incorporated.

In order to attain the object described above, according to the present invention, there is provided a disk drive as described in claim 1.

The above and other objects, features and advantages of the present invention will become apparent from the following description and the appended claims, taken in conjunction with the accompanying drawings in which like parts or elements are denoted by like reference characters.

### BRIEF DESCRIPTION OF THE DRAWINGS

Fig. 1 is a perspective view of a disk loading apparatus showing a preferred embodiment of the present invention:
Fig. 2 is an exploded perspective view of the disk loading apparatus shown in Fig. 1:
Fig. 3 is a plan view of the disk loading apparatus of Fig. 1 when a tray is at its retracted position:
Fig. 4 is a front elevational view of the disk loading apparatus shown in Fig. 1:
Fig. 5 is a plan view of the disk loading apparatus of Fig. 1 when the tray is at its advanced position:
Fig. 6 is an enlarge sectional view showing detailed construction of a motor pulley and a loading pulley of the disk loading apparatus of Fig. 1:
Fig. 7 is a schematic view showing a cam formed on a side face of a drive gear of the disk loading apparatus of Fig. 1:
Fig. 8 is an enlarged sectional view showing detailed construction of an insulator of the disk loading apparatus of Fig. 1:
Fig. 9 is a side elevational sectional view of the disk loading apparatus when the tray is at its outwardly drawn out position;
Fig. 10 is a side elevational sectional view of the disk loading apparatus when the tray is at its inwardly accommodated position:
Fig. 11 is a reduced schematic view of the disk loading apparatus when the tray is at its fully outwardly drawn out position;
Fig. 12 is a schematic view of the tray at a position at which a disk is arrested by an arresting element: and
Fig. 13 is an exploded perspective view showing an exemplary one of conventional compact disk players.

### DETAILED DESCRIPTION OF THE PREFERRED EMBODIMENT

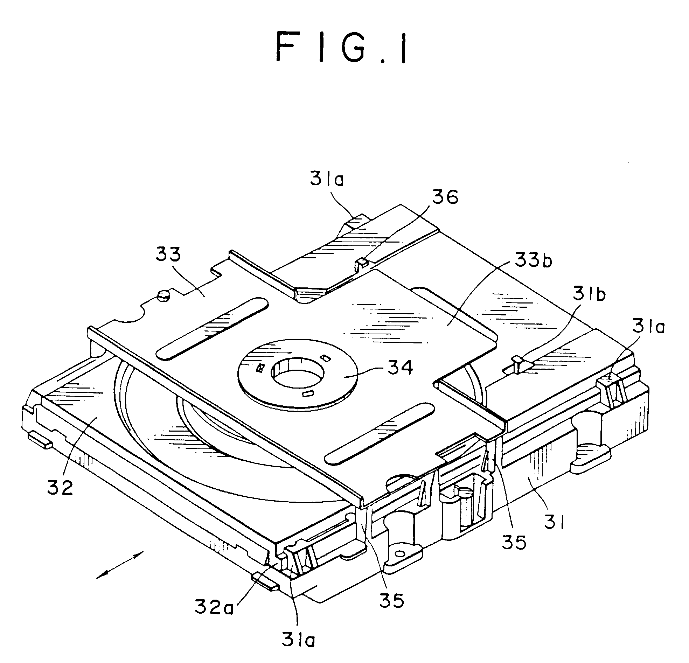

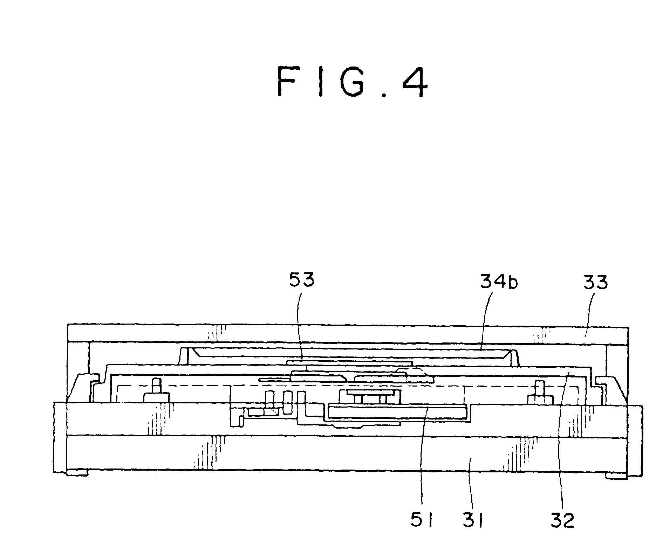

Referring first to Figs. 1 to 5, there is shown a disk loading apparatus to which the present invention is applied. The disk loading apparatus shown includes a main chassis 31 having two pairs of guide elements 31a formed at side portions thereof, and a tray 32 having a pair of rails 32a in the form of ribs formed thereon and held in engagement with the guide elements 31a. Consequently, the tray 32 is mounted for movement in directions indicated by double-sided arrow marks in Figs. 1, 3 and 5 on the main chassis 31.

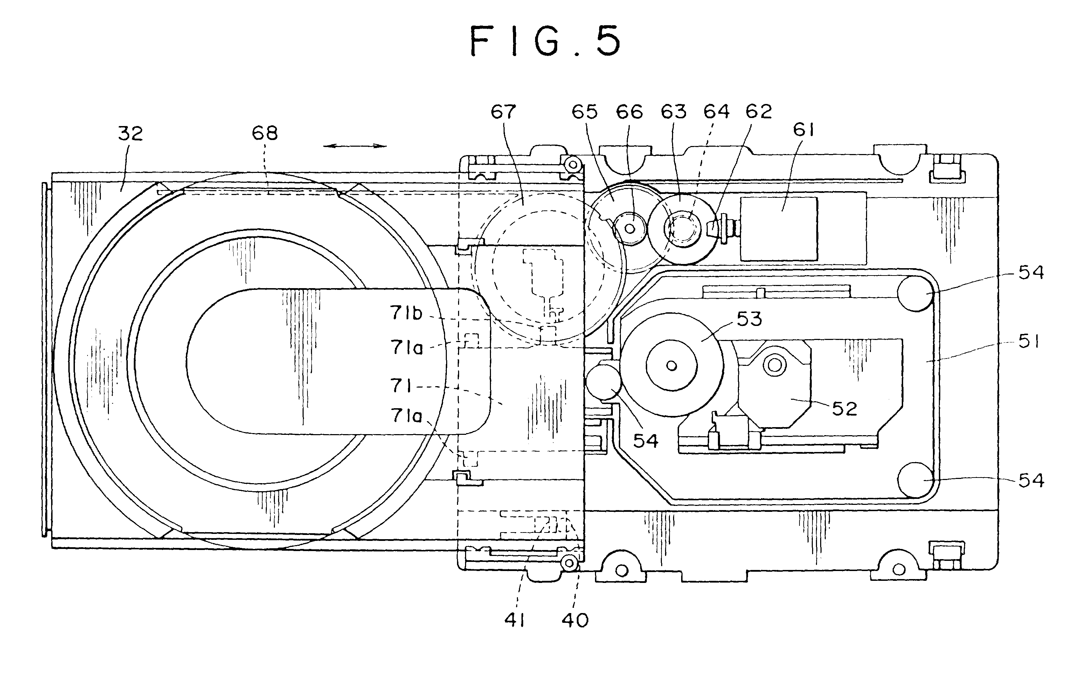

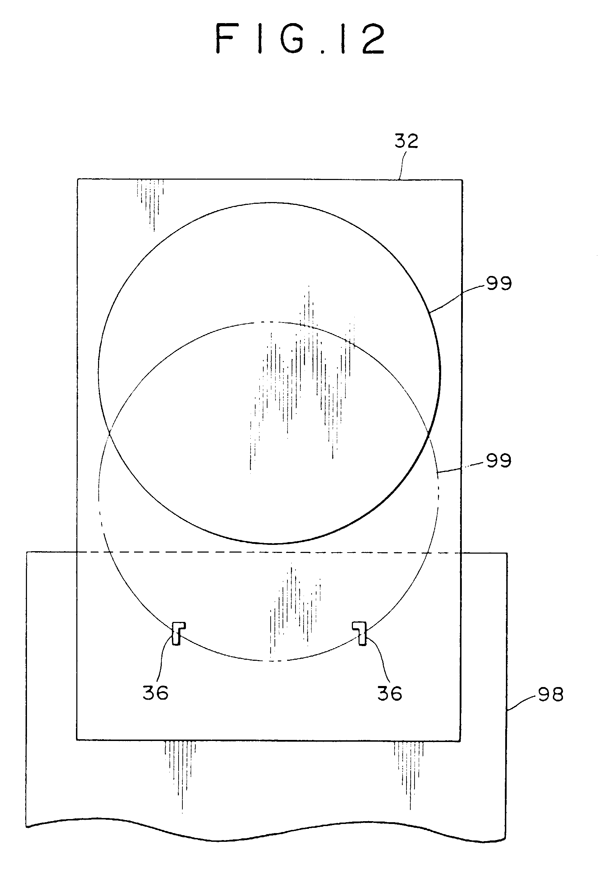

A plurality of pairs of projections 35 are formed on the main chassis 31, and a chucking chassis 33 is secured to the projections 35 individually by means of screws. A hole 33a is formed in the chucking chassis 33, and a chucking pulley member 34 including a chucking pulley 34a of a small diameter and another chucking pulley 34b of a large diameter is held for rotation in the hole 33a. The chucking pulley 34b cooperates with a turntable 53 (Fig. 5) to chuck therebetween a disk 99 (Fig. 12) received on the turntable 53.

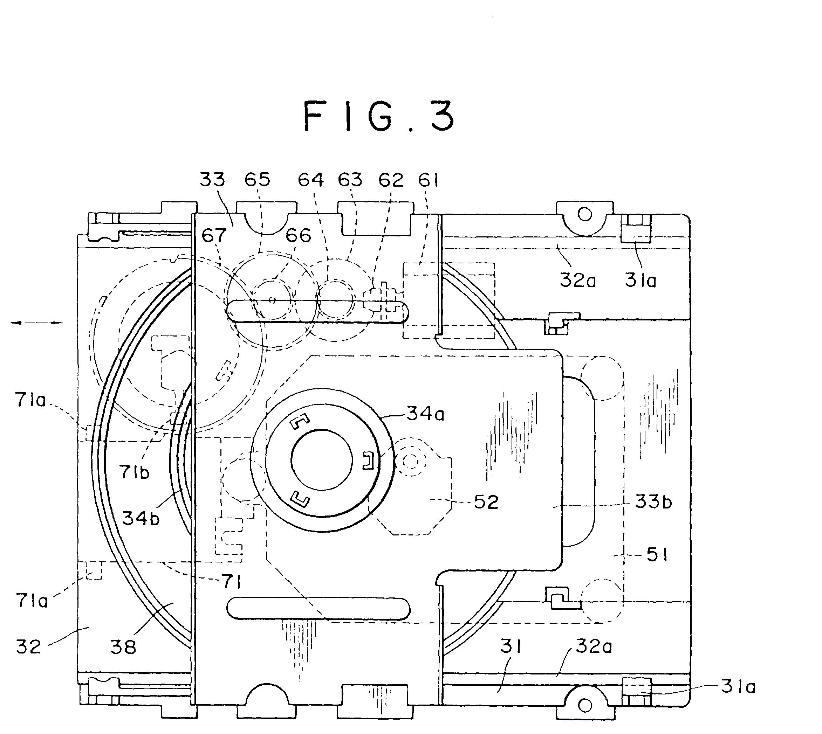

An annular recess 38 for receiving a disk 99 thereon is formed on the tray 32, and a hole 37, in which the turntable 53 and a pickup 52 are disposed, is formed in the recessed portion 38. Further, a pair of arresting portions 36 in the form of bent lugs are formed at left and right locations rearwardly of the tray 32. When the tray 32 is retracted to its most interior position (rightmost position in Figs. 3 and 5) with respect to the main chassis 31, a projected portion 33b of the chucking chassis 33 is positioned in the proximity of the arresting portions 36. Further, a rack 68 is formed on a side portion (upper portion in Fig. 5) of the tray 32, and a pin 40 is implanted at a rear portion on the opposite side portion of the tray 32. The pin 40 is engaged with a projection 41 formed on the main chassis 31 when the tray 32 is advanced to a predetermined position which is a position in Fig. 5, that is, a most advanced position from a main body 98 of the disk loading apparatus shown in Fig. 12.

As particularly shown in Figs. 3 and 5, a loading motor 61 having a generally elliptical profile is mounted on the main chassis 31 such that a rotary shaft thereof extends in parallel to the advancing and retracting direction of the tray 32, that is, parallel to the plane of each of Figs. 3 and 5. A motor pulley 62 made of a synthetic resin is coupled to an end of the rotary shaft of the loading motor 61. A tapered face 62a is formed on the motor pulley 62. A loading pulley 63, which is made of, for example, silicon rubber, is supported for rotation on the main chassis 31 such that a rotary shaft thereof extends perpendicularly to the rotary shaft of the loading motor 61. Also the loading pulley 63 has a tapered face 63a, which contacts with the tapered face 62a of the motor pulley 62 so that rotation of the motor pulley 62 is transmitted to the loading pulley 63.

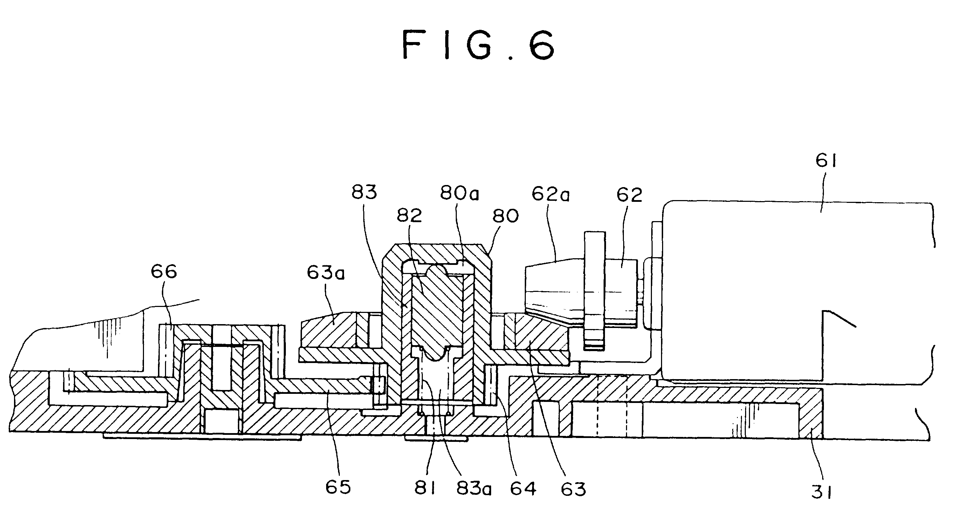

Referring also to Fig. 6, the loading pulley 63 has a rotary shaft 80 at the center thereof and has a cavity 80a formed in the inside thereof. A pin 83 is formed on the main chassis 31 and fitted in the cavity 80a. A cavity 83a is formed in the pin 83, and a spring 81 and a pin 82 are inserted in the cavity 83a. The spring 81 normally urges the pin 82 upwardly in Fig. 6 so that an upper end portion of the pin 82 in Fig. 6 urges an inner wall of the rotary shaft 80 upwardly, and as a result the tapered face 63a of the loading pulley 63 is held in contact under pressure with the tapered face 62a of the motor pulley 62. Consequently, rotation of the motor pulley 62 is transmitted with certainty to the loading pulley 63.

A gear 64 is formed coaxially on the rotary shaft 80 of the loading motor 63 below the loading pulley 63. The gear 64 is held in meshing engagement with another gear 65, and a further gear 66 of a small diameter is coupled coaxially to the gear 65. The gear 66 is held in meshing engagement with a drive gear 67, which is held in meshing engagement with the rack 68 on the tray 32.

Referring to Figs. 3, 5 and 7, the drive gear 67 includes an upper gear 67a and a lower gear 67b and has a cam 67c in the form of a cam groove formed between the gears 67a and 67b. A pin 71b is formed on a pivotal plate 71 (Fig. 3) and is fitted in the cam 67c. Consequently, as the drive gear 67 rotates, the pin 71b is guided by the cam 67c so that the pivotal plate 61 is pivoted in a direction perpendicular to the plane of Fig. 3 around a common axis of a pair of projections 71a at which the pivotal plate 71 is supported for rotation on the main chassis 31.

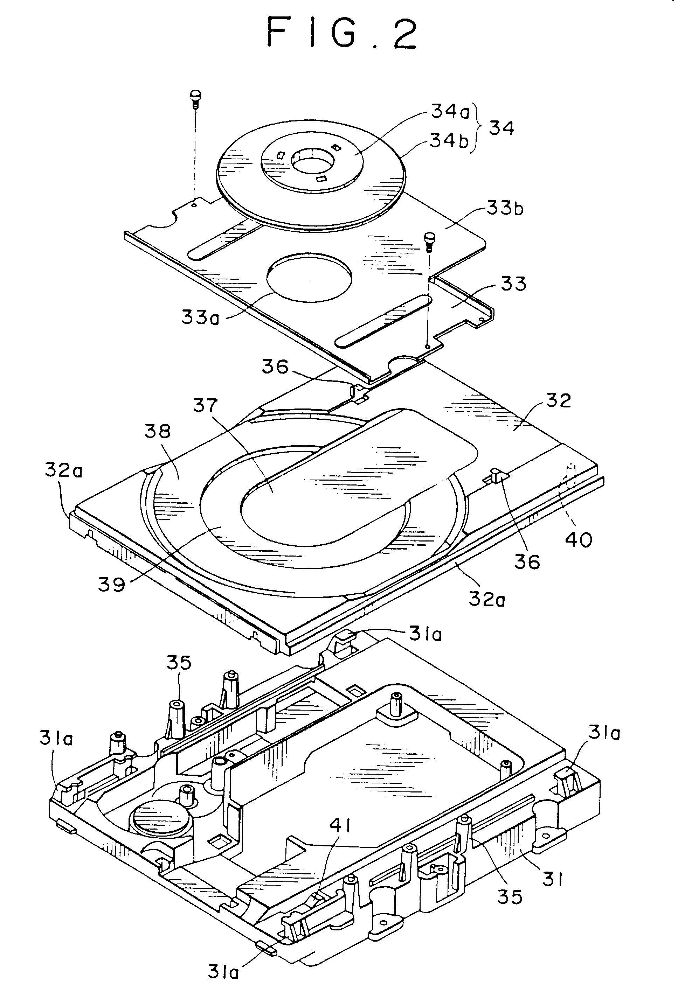

Referring to Figs. 3 and 5, a turntable chassis 51 is disposed in the hole 37 shown in Fig. 2. The turntable chassis 51 is supported on the main chassis 31 by means of three insulators 54. The turntable 53 and the pickup 52 are disposed on the turntable chassis 51. The turntable 53 rotates a disk 99 (Fig. 12) when the disk 99 is received thereon. When the disk 99 is received on the turntable 53 the chucking pulley 34b shown in Fig. 2 presses the disk 99 against the turntable 53. The pickup 52 is mounted for movement in the leftward and rightward directions of Fig. 5 on the turntable chassis 51.

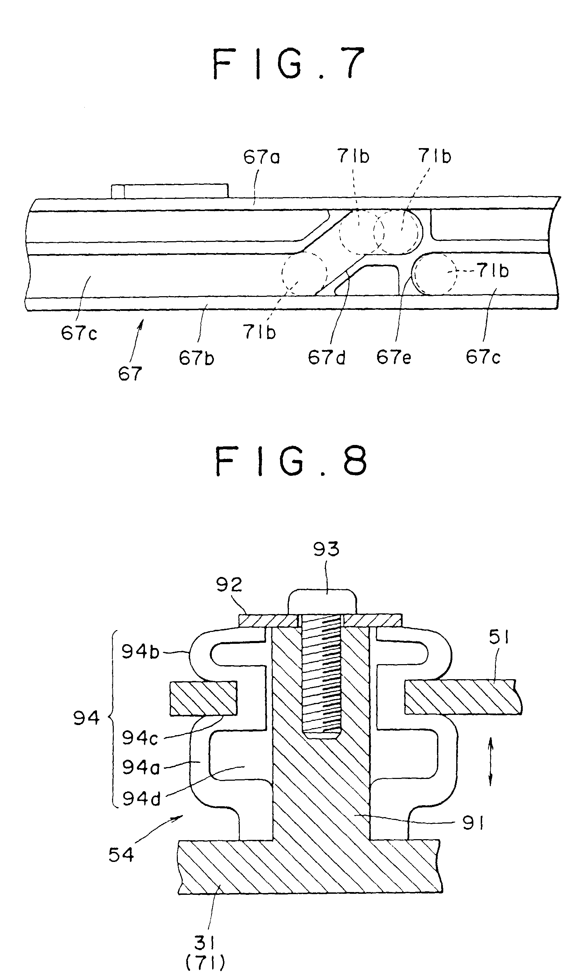

Referring now to Fig. 8. an insulator 54 is shown in detail. The insulator 54 shown includes a member 94 formed from rubber. The member 94 has a pair of swollen portions 94a and 94b swollen outwardly and has, between the swollen portions 94a and 94b, an inwardly recessed concave portion 94c, in which the turntable chassis 51 is received. A hollow 94d is formed in the inside of the member 94, and a pin 91 formed either on the main chassis 31 or on the pivotal plate 71 is inserted in the hollow 94d of the member 94. A screw 93 is screwed in the pin 91 with a washer 92 interposed therebetween. Otherwise possible letting off of the member 94 from the pin 91 is prevented by the washer 92.

Consequently, even if the main chassis 31 is vibrated by external vibrations, the vibrations thereof are attenuated by the member 94 so that the vibrations may not be transmitted very much to the turntable chassis 51. Further, the distance between the concave portion 94c and the pin 91 is set comparatively large so that not only the turntable chassis 51 is movable by a small distance in the upward and downward directions in Fig. 8, but also the turntable chassis 51 can be inclined or pivoted within a predetermined angular range relative to the main chassis 31.

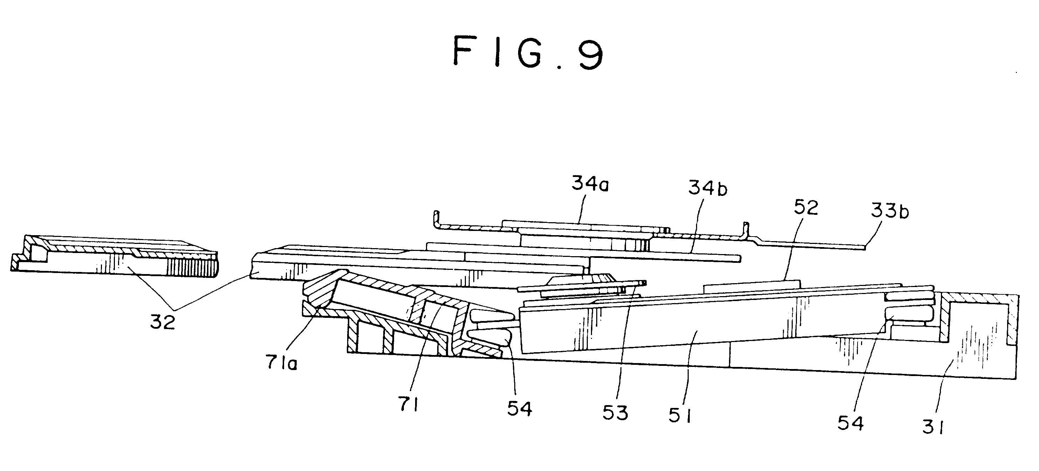

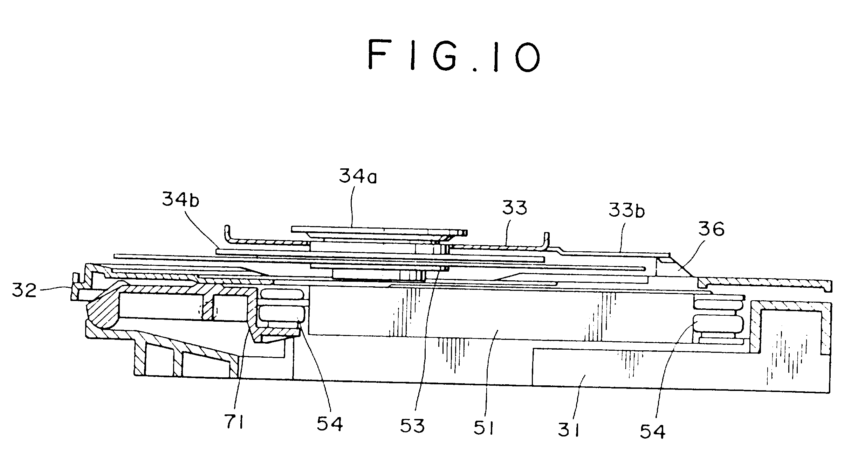

Such pivotal motion between the pivotal plate 71 and the turntable chassis 51 around the insulator 54 can be seen from Figs. 9 and 10. Fig. 9 particularly shows the disk loading apparatus in a condition wherein the tray 32 is advanced outwardly from the main chassis 31. In the position shown in Fig. 9, the pivotal plate 71 is at its position pivoted in the clockwise direction in Fig. 9 around the common axis of the projections 71a. Meanwhile, the turntable chassis 51 is at its position pivoted in the counterclockwise direction around the other two insulators 54 only one of which is shown at a right portion in Fig. 9. While the turntable chassis 51 and the pivotal plate 71 are coupled to each other by way of the insulator 54 shown on the left side in Fig. 9, since the insulator 54 supports the turntable chassis 51 for pivotal motion thereon as described hereinabove, such pivotal motion of the turntable chassis 51 is allowed by the insulator 54.

When the turntable 53 is at its downwardly moved position shown in Fig. 9, even if the tray 32 is moved rightwardly in Fig. 9, the turntable 53 will not interfere with the tray 32 at all.

On the other hand, when the tray 32 is retracted to a predetermined position, the turntable chassis 51 and the pivotal plate 71 are returned to their horizontal positions as shown in Fig. 10. Consequently, the turntable 53 projects upwardly and is inserted into the center hole of a disk transported thereto by the tray 32. As a result, the disk is chucked between the chucking pulley 34 and the turntable 53.

Subsequently, operation of the disk loading apparatus will be described. Now, if an instruction of advancement of the tray 32 is issued when the tray 32 is accommodated at the rightmost position with respect to the main chassis 31 as shown in Fig. 3, the loading motor 61 is energized to rotate. The rotation of the loading motor 61 is transmitted to the drive gear 67 by way of the motor pulley 62, the loading pulley 63, the gear 64, the gear 65 and the gear 66. In this instance, when the rotation is transmitted from the motor pulley 62 to the loading pulley 63, the direction of the axis of rotation is turned by 90 degrees as seen from Fig. 6. Consequently, the drive gear 67 is rotated in the counterclockwise direction in Fig. 3. Since the drive gear 67 is held in meshing engagement with the rack 68 of the tray 32 as shown in Fig. 5, the rack 68 is moved in the leftward direction in Fig. 3 until it projects from the main chassis 31 as shown in Fig. 5.

When the tray 32 is in its accommodated position shown in Fig. 3. the pin 71b of the pivotal plate 71 remains fitted at an upper portion of the cam 67c shown in Fig. 7. Then, when the drive gear 67 rotates, the pin 71b moves in the downward direction in Fig. 7 following an inclined face 67d of the cam 67c. As a result, the pivotal plate 71 is pivoted in the clockwise direction as shown in Fig. 9 around the common axis of the projections 71a. Since the turntable chassis 51 is coupled to the pivotal plate 71 by way of the insulator 54, the turntable chassis 51 is pivoted simultaneously in the counterclockwise direction in Fig. 9. Since the turntable chassis 51 is pivoted downwardly in this manner, the tray 32 can be moved to the unloading position without a trouble.

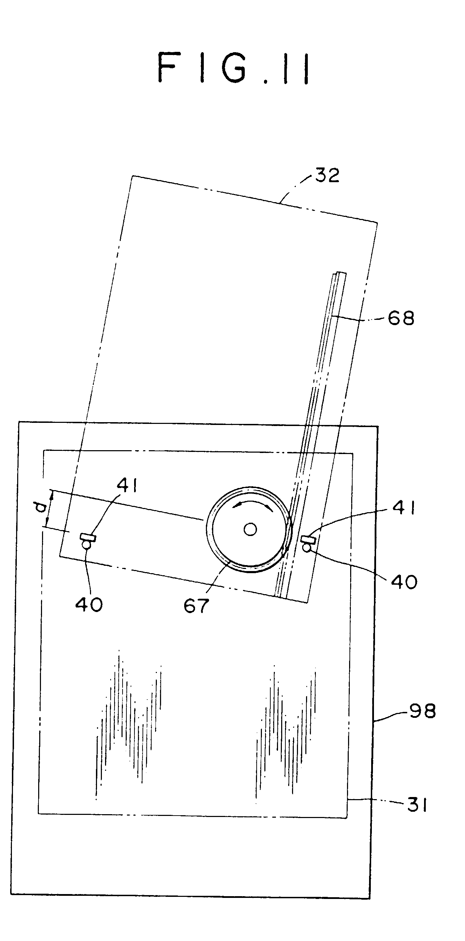

When the tray 32 is advanced to the predetermined position, the right side pin 40 of the tray 32 is contacted with the corresponding projection 41 of the main chassis 31 as shown in Fig. 11. Consequently, a right side portion of the tray 32 in Fig. 11 cannot be advanced any more from the main body 98.

In the meantime, the drive gear 67 is still driven so that the tray 32 may be advanced further from the main body 98. As a result, only a left side portion of the tray 32 in Fig. 11 is advanced forwardly (upwardly in Fig. 11) from the main body 98 as shown in Fig. 11. Then, the left side pin 40 in Fig. 11, which is disposed rearwardly by a distance d from the right side pin 40, is soon contacted with the corresponding projection 41. Consequently, the tray 32 cannot be advanced any more. Thereupon, the rotation of the drive gear 67 is stopped. As a result, the tray 32 is stopped at the position at which it is pivoted a little to that side (right side in Fig. 11) on which the rack 68 is formed as shown in Fig. 11. While Fig. 11 indicates the inclined condition of the tray 32 in an exaggerated manner for convenience of illustration, actually the inclination is comparatively small, and a user will recognize that the tray 32 and the main body 98 extend substantially in parallel to each other.

When the tray 32 is at the position described just above, if a disk is placed onto the recessed portion 38 of the tray 32 and an instruction of loading is issued, then the loading motor 61 is energized to rotate in the direction opposite to that described above. Consequently, the drive gear 67 is rotated in the clockwise direction in Fig. 11. In this instance, since the rack 68 is provided on only one side of the tray 32 as described hereinabove, the force of the drive gear 67 acts only upon the rack 68 side of the tray 32, and consequently, a moment acts upon the tray 32 so that it pivots the tray 32 in the clockwise direction in Fig. 11. However, as described hereinabove, the tray 32 is already at its stopped position wherein it is pivoted a little in the clockwise direction. As a result, the tray 32 cannot be pivoted any more in the clockwise direction. Accordingly, the tray 32 is retracted smoothly toward the main body 98 side without a play.

It is to be noted that, while, in Fig. 11, the pin 40 and the projection 41 are formed also on the right sides of the tray 32 and the main chassis 31, respectively, for convenience of description, such stoppers provided by the right side pin 40 and the right side projection 41 are not formed actually in the disk loading apparatus of the present embodiment. Instead, upon unloading, the engagement between the pin 71b of the pivotal plate 71 and an end portion 67e of the cam 67c takes place at a timing a little earlier than the engagement between the pin 40 and the projection 41 as seen from Fig. 7. In particular, upon unloading, after the pin 71b and the end portion 67e are engaged with each other to stop rotation of the drive gear 67, the tray 32 tends to further advance by its own inertia. As a result, the right side of the tray 32 is stopped at the position at which the pin 71b and the end portion 67e are engaged with each other, but the left side is further advanced and is then stopped at a position at which the pin 40 and the projection 41 are engaged with each other.

If the drive gear 67 rotates in the clockwise direction to retract the tray 32 toward the main body 98 side, when the tray 32 is moved to a predetermined position, the pin 71b of the pivotal plate 71 is lifted by the inclined face 67d of the cam 67c as seen from Fig. 7. As a result, the pivotal plate 71 is pivoted in the counterclockwise direction in Fig. 9 around the common axis of the projections 71a. Consequently, also the turntable chassis 51 is lifted upwardly in Fig. 9. Then, when the pin 71b reaches an upper side groove (Fig. 7) of the cam 67c, the pivotal plate 71 and the turntable chassis 51 come their individual horizontal positions (Fig. 10). In this instance, the turntable 53 is fitted into the center hole of the disk. Then, the chucking pulley 34b presses the disk against the turntable 53. Accordingly, the turntable 53 can thereafter be rotated to reproduce information from the disk.

In the meantime, while the disk player is normally used in a horizontally placed condition, it sometimes occurs that an instruction of unloading is issued in error while the disk player is placed vertically. In particular, an instruction of unloading may be issued while the disk player is in a position pivoted by 90 degrees in the clockwise direction from the position shown in Fig. 10. In this instance, since the turntable chassis 51 and the pivotal plate 71 are pivoted in their sinking direction as described hereinabove, the disk placed on the turntable 53 may drop downwardly (rightwardly in Fig. 10). Here, since the arresting portions 36 are formed on the tray 32, the disk is arrested by the arresting portions 36 and is prevented from dropping to the interior of the body 98 any more. Further, in order to make the arresting engagement by the arresting portions 36 surer, a projected portion 33b is formed on the chucking plate 34 and extends to a position in the proximity of the arresting portion 36. As a result, when the disk drops, it is prevented from being inclined to such a degree that it jumps over the arresting portions 36. As a result, the disk 99 is arrested by the arresting portions 36 with certainty.

The position of the arresting portions 36 is set so that, when the tray 32 thereafter comes to a predetermined position advanced from the main body 98, the disk 99 arrested by the arresting portions 36 is exposed sufficiently from the main body 98 as seen from Fig. 12. Accordingly, the user can take out the disk 99 arrested by the arresting portions 36 with certainty. When the disk 99 is in position, naturally the disk 99 can be removed readily from the tray 32.

Having now fully described the invention, it will be apparent to one of ordinary skill in the art that many changes and modifications can be made thereto without departing from the scope of the invention as set forth herein.

## Claims

1. A disc drive comprising:
- disc driving means (53) for rotationally driving an optical disc (99);
- an optical pickup (52) for radiating a light beam toward the optical disc (99);
- a first base (51) comprising said rotational driving means (53) and said optical pickup (52);
- a second base (31) fixed in the disc drive;
- a plate-like member (71) pivotally supported by said first base (51) and said second base (31) and enabling a pivotal movement of said first base (51) with respect to said second base (31);
- a driving means (61-68) for driving said plate-like member (71) for pivotally moving said first base (51) in an upward direction and downward direction;
- at least one first vibration damping means (54) provided between said plate-like member (71) and said first base (51); and
- at least one second vibration damping means (54) provided between said first base (51) and said second base (31).

2. A disc drive according to claim 1, wherein said driving means (61-68) comprises a cam portion (67c) and a drive device (61) for rotationally driving said cam portion (67c), and said plate-like member (71) comprises an engaging portion (71b) engaged to said cam portion (67c) and pivotally moved between said upward direction and said downward direction along said cam portion (67c).

3. A disc drive according to claim 2, wherein one end portion of said first base (51) is supported by said plate-like member (71) via said first vibration damping means (54) and the other end of said first base (51) is supported by said second base (31) via said second vibration damping means (54).

4. A disc drive according to any one of claims 1 to 3, wherein said disc drive further comprises a disc transporting member (32) having a recess portion (38) and being moved by said driving means (61-58) between an outside position in which said recess portion (38) is projected from the disc drive and an inside position in which said recess portion (38) is contained the disc drive.

5. A disc drive according to claim 4, wherein said driving means (61-68) comprises a gear (67) having a cam portion (67c) for moving said disc transporting member (32) and a drive device (61) for rotationally driving said gear (67), said gear (67) is engaged to said disc transporting member (32), and said plate-like member (71) comprises an engaging portion (71b) engaged to said cam portion (67c) and moved between said upward direction and said downward direction aiong said cam portion (67c).

6. A disc drive according to claim 5, wherein the other end portion of said plate-like member (71) has at least one concave portion provided in said first vibration damping means (54).

## Patentansprüche

1. Plattenspieler aufweisend:
- eine Plattenantriebseinrichtung (53) zum Drehantrieb einer optischen Platte (99);
- eine optische Abtasteinheit (52) zur Ausstrahlung eines Lichtstrahls auf die optische Platte (99);
- eine erste Basis (51) aufweisend die Drehantriebseinrichtung (53) und die optische Abtasteinheit (52);
- eine in dem Plattenspieler befestigte zweite Basis (31);
- ein plattenförmiges Teil (71), das drehbar durch die erste Basis (51) und die zweite Basis (31) gehalten ist, und eine Kippbewegung der ersten Basis (51) bezüglich der zweiten Basis (31) ermöglicht;
- eine Antriebseinrichtung (61-68) zum Antrieb des plattenförmigen Teils (71) zur Kippbewegung der ersten Basis (51) in Aufwärts- und Abwärtsrichtung;
- wenigstens eine erste Vibrationsdämpfungseinrichtung (54), die zwischen dem plattenförmigen Teil (71) und der ersten Basis (51) vorgesehen ist; und
- wenigstens eine zweite Vibrationsdämpfungseinrichtung (54), die zwischen der ersten Basis (51) und der zweiten Basis (31) vorgesehen ist.

2. Plattenspieler gemäß Anspruch 1,
wobei die Antriebseinrichtung (61-68) einen Nockenabschnitt (67c) und eine Antriebsvorrichtung (61) zum Drehantrieb des Nockenabschnitts (67c) aufweist, und das plattenförmige Teil (71) einen Eingriffsabschnitt (71b) aufweist, der in den Nockenabschnitt (67c) eingreift und kippend zwischen der Aufwärtsrichtung und der Abwärtsrichtung entlang des Nockenabschnitts (67c) bewegt wird.

3. Plattenspieler gemäß Anspruch 2,
wobei ein Endabschnitt der ersten Basis (51) durch das plattenförmige Teil (71) über die erste Vibrationsdämpfeinrichtung (54) gehalten wird und das andere Ende der ersten Basis (51) durch die zweite Basis (31) über die zweite Vibrationsdämpfeinrichtung (54) gehalten wird.

4. Plattenspieler gemäß einem der Ansprüche 1 bis 3,
wobei der Plattenspieler ferner ein Plattentransportteil (32) mit einem Ausnehmungsabschnitt (38) aufweist, welches Transportteil durch die Antriebseinrichtung (61-68) zwischen einer äußeren Position, in welcher der Ausnehmungsabschnitt (38) aus dem Plattenspieler ragt, und einer Innenposition bewegbar ist. in welcher der Ausnehmungsabschnitt (38) in dem Plattenspieler enthalten ist.

5. Plattenspieler gemäß Anspruch 4,
wobei die Antriebseinrichtung (61-68) ein Antriebsrad (67) mit einem Nockenabschnitt (67c) zur Bewegung des Plattentransportteils (32) und eine Antriebsvorrichtung (61) zum Drehantrieb des Antriebsrades (67) aufweist, wobei das Antriebsrad (67) mit dem Plattentransportteil (32) im Eingriff ist, und wobei das plattenförmige Teil (71) einen Eingriffsabschnitt (71b) aufweist, der in den Nockenabschnitt (67c) eingreift und zwischen der Aufwärtsrichtung und der Abwärtsrichtung entlang des Nockenabschnitts (67c) bewegt wird.

6. Plattenspieler gemäß Anspruch 5,
wobei der andere Endabschnitt des plattenförmigen Teils (71) wenigstens einen konkaven Abschnitt aufweist, der in der ersten Vibrationsdämpfeinrichtung (54) vorgesehen ist.

## Revendications

1. Appareil d'entraînement de disque, comprenant :
- un dispositif (53) d'entraînement de disque destiné à entraîner un disque optique (99) en rotation,
- un capteur optique (52) destiné à projeter un faisceau lumineux vers le disque optique (99),
- une première base (51) qui comprend le dispositif d'entraînement en rotation (53) et le capteur optique (52),
- une seconde base (31) fixée dans l'appareil d'entraînement de disque,
- un organe (71) en forme de plaque supporté de manière pivotante par la première base (51) et la seconde base (31) et permettant un mouvement de pivotement de la première base (51) par rapport à la seconde base (31),
- un dispositif (61-68) d'entraînement de l'organe analogue à une plaque (71) afin qu'il déplace par pivotement la première base (51) vers le haut et vers le bas,
- au moins un premier dispositif amortisseur de vibrations (54) placé entre l'organe en forme de plaque (71) et la première base (51), et
- au moins un second dispositif d'amortissement de vibrations (54) placé entre la première base (51) et la seconde base (31).

2. Appareil d'entraînement de disque selon la revendication 1, dans lequel le dispositif d'entraînement (61-68) comprend une partie de came (67c) et un dispositif d'entraînement (61) destiné à entraîner en rotation la partie de came (67c), et l'organe en forme de plaque (71) comprend une partie de coopération (71b) qui coopère avec la partie de came (67c) et qui est déplacée de manière pivotante entre la direction ascendante et la direction descendante le long de la partie de came (67c).

3. Appareil d'entraînement de disque selon la revendication 2, dans lequel une première partie d'extrémité de la première base (51) est supportée par l'organe en forme de plaque (71) par l'intermédiaire du premier dispositif d'amortissement de vibrations (54) et l'autre extrémité de la première base (51) est supportée par la seconde base (31) par l'intermédiaire du second dispositif d'amortissement de vibrations (54).

4. Appareil d'entraînement de disque selon l'une quelconque des revendications 1 à 3, dans lequel l'appareil d'entraînement de disque comporte en outre un organe (32) de transport de disque ayant une partie de cavité (38) qui est déplacée par le dispositif d'entraînement (61-68) entre une position externe dans laquelle la partie de cavité (38) dépasse de l'appareil d'entraînement de disque et une position interne dans laquelle la partie de cavité (38) est logée dans l'appareil d'entraînement de disque.

5. Appareil d'entraînement de disque selon la revendication 4, dans lequel le dispositif d'entraînement (61-68) comprend un pignon (67) ayant une partie de came (67c) destinée à déplacer l'organe de transport de disque (32) et un dispositif d'entraînement (61) destiné à entraîner en rotation le pignon (67), ce pignon (67) est en prise avec l'organe de transport de disque (32), et l'organe en forme de plaque (71) comprend une partie de coopération (71b) qui coopère avec la partie de came (67c) et qui est déplacée entre la direction ascendante et la direction descendante le long de la partie de came (67c).

6. Appareil d'entraînement de disque selon la revendication 5, dans lequel l'autre partie d'extrémité de l'organe en forme de plaque (71) a au moins une partie concave disposée dans le premier dispositif d'amortissement de vibrations (54).
